# EUROPEAN PATENT SPECIFICATION

(11) **EP 4 120 484 B1**
(45) Date of publication and mention of the grant of the patent: **21.05.2025**
(21) Application number: 22184894.8
(22) Date of filing: 14.07.2022
(51) Int. Cl.: H01R 13/52, H01R 13/516, H01R 13/506, B60L 53/16

(54) **CHARGING SOCKET PROVIDED WITH A DUAL-FUNCTIONAL FEATURE FOR DRAINAGE AND FIXING FUNCTIONS**
LADEBUCHSE MIT ZWEI FUNKTIONSMERKMALEN FÜR DRAINAGE- UND BEFESTIGUNGSFUNKTIONEN
PRISE DE CHARGE MUNIE D'UN ÉLÉMENT À DOUBLE FONCTION POUR LES FONCTIONS DE DRAINAGE ET DE FIXATION

(30) Priority: 15.07.2021 IT 202100018752
(43) Date of publication of application: 18.01.2023
(73) Proprietor: TE Connectivity Italia Distribution S.r.l., 10093 Collegno (TO) (IT)
(72) Inventor: Amerio, Fulvio, Torino (IT); Spincich, Demis, Torino (IT); Spolverato, Arianna, Torino (IT)
(74) Representative: Grünecker Patent- und Rechtsanwälte PartG mbB

(56) References cited:
- CN-U- 207 098 132
- CN-U- 212 676 521
- DE-A1- 102013 213 336

## Description

The present invention relates to a charging socket for an electric or hybrid vehicle. In particular, the present invention refers to a charging socket for an electric or hybrid vehicle further provided with drainage means for discharging water that has entered the charging socket and with fixing means for fixing it to a mounting bracket. More specifically, the present invention refers to a charging socket for an electric or hybrid vehicle, wherein the drainage means and the fixing means are implemented in a single dual-functional feature.

### STATE OF THE ART

It is known at the state of the art to provide charging sockets for hybrid or electric vehicles with a drainage element for discharging fluids from the contact chambers and with a fixing element for fixing them to mating components, such as a mating bracket. In fact, charging sockets for hybrid or electric vehicles typically operate with high voltages and, since the contact with water spray and moisture cannot be avoided in principle, it is necessary to provide them with drainage elements for discharging water that has entered the charging socket. Moreover, it may be necessary to assemble the charging sockets with mating brackets for protecting them against the external environment.

Document WO 2015/004053 A1, which is a patent application from the same Applicant, describes for instance a charging socket comprising contact chambers, wherein each of the contact chambers have a drainage opening, through which fluids (gas or liquids) which have entered the contact chamber can be discharged. Each of the drainage openings opens into a corresponding drainage element, which leads into the discharge connection pieces that can lead the fluid, for example, to a hose. The drainage element typically requires a protective cap to prevent foreign objects to enter them. Moreover, in order to protect the power contact elements, the charging socket may have a mating cover. CN207098132U discloses a charging socket according the preamble of claim 1.

Further examples of charging sockets provided with fixing portions and drainage pipes forming distinct elements are disclosed in documents JP 2019 160809 A, WO 2018091422 A1 and WO 2018/092646 A1.

In the charging sockets known at the state of the art, the fixing elements and the drainage elements are made as distinct components and they have large dimensions and require a large amount of plastic to be produced, thus having a high impact on the environment. Moreover, they are difficult to mold and require complex tools to be produced.

In view of the above problems, it is therefore an objective of the present invention to provide a charging socket wherein the fixing element and the drainage element are molded as a single component that can perform both functions.

### SUMMARY

The present invention refers to a charging socket provided with a drainage element and with a fixing element for fixing it to a mating component, wherein the drainage element and the fixing element are molded in a single piece.

According to an embodiment of the present invention, a charging socket, for example for a hybrid or electric vehicle, is provided, the charging socket being defined in claim 1.

The advantage of this configuration is that the dual-functional element is a single molded piece which preforms a double function, that is the draining function and the fixing function to a mounting bracket. In this way, the overall dimensions of the charging socket are reduced and the molding process for producing the charging socket is simplified and sped up and the amount of plastic required for producing the charging socket is reduced. Therefore, time and production costs are reduced.

The housing of the charging socket according to the invention is produced from a suitable electrically insulating, mechanically stable and age-resistant plastic material, for example, by using injection-molding technology.

Preferably, the dual-functional element is formed on the lower surface of the electrically insulating housing. In fact, the dual-functional element comprises at least one drainage channel for discharging fluids from the charging socket and the fluids flow inside the drainage channels because of gravity. Therefore, it is preferable that the dual-functional element is placed on the lower surface of the charging socket, wherein the fluids tend to flow because of gravity.

According to a further embodiment of the present invention, a charging socket is provided, wherein the fixing component comprises a projecting surface configured to be fitted on a mating fitting portion of a mounting bracket.

This configuration is advantageous because the fixing component comprising a projecting surface may be simply molded and can be efficiently fitted on a mating fitting portion of a mounting bracket, in order to keep the housing of the charging socket and the mounting bracket in the assembled configuration.

According to a further embodiment of the present invention, a charging socket is provided, wherein the fixing component comprises a projecting surface configured to be inserted into a corresponding fixing opening of a mounting bracket.

This configuration is advantageous because the fixing component comprising a projecting surface may be simply molded and can be efficiently inserted into a corresponding fixing opening of a mounting bracket, in order to keep the housing of the charging socket and the mounting bracket in the assembled configuration.

According to a further embodiment of the present invention, a charging socket is provided, wherein at least two drainage channels are formed, which are adjacent to one another and form a draining component having a rectangular section with two long sides and two short sides, and the projecting surface of the fixing component projects outward of one of the two long sides of the drainage component.

The advantage of this configuration is that the drainage component and the fixing component share a delimiting surface, therefore there is no need to separate them along the outer surface of the charging socket and the overall dimensions of the charging socket can be reduced. In this way, the production times and costs can be reduced and the molding process can be simplified. Since the dual-functional element comprises a drainage component and a fixing component sharing a projecting surface, the distance between the side of the charging socket facing the vehicle and the side of the charging socket facing the charging plug can be reduced.

The drainage channels may preferably have an orthogonal geometry, so that, when a series of adjacent drainage channels is formed, the resulting drainage component may have a substantially rectangular section. The drainage component thus has a rectangular section having two parallel long sides and two parallel short sides. In correspondence with one of the two long sides, a projecting surface may be formed. The projecting surface may project outwards of the charging socket housing and may extend along the entire length of one of the two long sides. According to this preferred embodiment, the projecting surface may form a delimiting surface of the drainage component and may also form a fixing portion to be fixed to a mating fitting portion of a mounting bracket.

According to a further embodiment of the preset invention, a charging socket is provided, wherein the projecting surface projects outwards of the long side of the drainage component which is closer to the one or more cavities.

The advantage of this configuration is that the assembling process of the mounting bracket on the charging socket housing is both simplified and sped up. In fact, the projecting surface is easy to handle for the user, because it is separated from the vehicle chassis on which the charging socket is mounted.

According to the invention, the charging socket comprises a bracket mounted on the electrically insulating housing is provided, wherein the bracket comprises a fitting portion on which the fixing component is fitted, in order to fasten the bracket to the electrically insulating housing.

The advantage of this configuration is that the charging socket is protected against the external environment by the bracket, which is mounted on the electrically insulating housing. Moreover, the housing may be fixed to the car chassis through the bracket and the bracket may further hold the courtesy lights whose LEDs are located into housing.

The bracket is configured to encapsulate the charging socket and is fastened thereto by means of a fitting portion on which the fixing component of the charging socket is fitted. In this way, the reciprocal position between the charging socket housing and the bracket is fixed and maintained during operation. In fact, the charging socket is exposed to mechanical vibration during usage and it is thus necessary that the bracket is reliably fixed and mounted onto the electrically insulating housing of the charging socket.

According to a preferred embodiment, the fixing component comprises a projecting surface and the bracket is assembled to the charging socket housing by pivotally mounting it around the projecting surface. Preferably, when the bracket and the housing are assembled, the projecting surface of the fixing component may abut on a mating fitting portion of the bracket and, in this way, the bracket may be securely fastened to charging socket housing.

According to the invention, the bracket further comprises a fixing opening wherein the fixing component is inserted, in order to fasten the bracket to the electrically insulating housing.

The advantage of this configuration is that the charging socket is protected against the external environment by means of the bracket, which is mounted onto the electrically insulating housing. Moreover, the housing may be fixed to the car chassis through the bracket and the bracket may further hold the courtesy lights whose LEDs are located into housing.

The bracket is preferably mounted onto the charging socket so that the fixing component of the housing in inserted into the fixing opening of the bracket, so that the bracket is fastened to the electrically insulating housing and is kept in the correct position during operation of the charging socket. In fact, since the charging socket is exposed to mechanical vibration during usage, it is necessary that the bracket is reliably fixed and mounted onto the electrically insulating housing of the charging socket.

In an exemplificative configuration, the fixing opening may be bigger than the fixing component, so that the fixing component is inserted thereto and is then held by a support portion of the fixing opening. In another exemplificative configuration, the fixing opening may have such dimensions as to allow a precise fitting of the fixing component, in order to assure an even better fastening of the bracket to the charging socket housing.

According to the invention, the bracket further comprises a flat protective portion and is configured in such a way that, when the bracket is mounted on the electrical insulating housing, the flat protective portion covers the drainage component so as to prevent external elements from entering into the housing. This configuration is advantageous because it offers a specific and complete protection for the drainage component and it prevents external elements from entering into the housing and damaging it, while still allowing the stream of water coming out of the charging socket through the drainage component. Moreover, the advantage of this configuration is that it is not necessary to use a protective cap to cover the drainage channels, as done in prior art, because the drainage component is directly covered by the mounting bracket. According a further embodiment of the present invention, a charging socket is provided, wherein the bracket further comprises an inlet opening, which is placed in correspondence to the one or more cavities of the electrically insulating housing so that one or more electrical contacts can be inserted into the one or more cavities.

This configuration has the advantage that the charging socket can still carry out its function of accommodating electrical contacts and providing an electrical connection, while being assembled with the mounting bracket and protected against the external environment. In fact, the cavities for electrical contacts are not covered by the bracket and the electrical contacts can be easily inserted therein.

According to a further embodiment of the present invention, a hybrid or electric vehicle provided with a charging socket as the ones described above is provided, wherein the charging socket is mounted on the vehicle chassis.

The advantage of this configuration is that the charging socket to me mounted on the hybrid or electric vehicle is more compact and easier to handle.

### FIGURES

The present invention will be described with reference to the attached figures in which the same reference numerals and/or signs indicate the same part and/or similar and/or corresponding parts of the machine. In the figures:
Figure 1 schematically illustrates a three dimensional view of a charging socket according to an embodiment of the present invention, wherein the fixing element and the drainage element are molded as a single component.
Figure 2 schematically illustrates a three dimensional view of a bracket for a charging socket according to an embodiment of the present invention.
Figure 3 schematically illustrates a three dimensional view of a charging socket further provided with a bracket, according to an embodiment of the present invention.
Figure 4 schematically illustrates a sectional view of a charging socket further provided with a bracket, according to an embodiment of the present invention.
Figure 5 schematically illustrates a three dimensional view of a charging socket according to the prior art, wherein the fixing element and the drainage element are molded as distinct components.

### DESCRIPTION

In the following, the present invention is described with reference to particular embodiments as shown in the enclosed drawings. Nevertheless, the present invention is not limited to the particular embodiments described in the following detailed description and shown in the figures, but, instead, the embodiments described simply exemplify several aspects of the present invention, the scope of which is defined by the appended claims.

Further modifications and variations of the present invention will be clear for the person skilled in the art. Therefore, the present description must be considered as including all the modifications and/or variations of the present invention, the scope of which is defined by the appended claims. For simplicity, identical or corresponding components are indicated in the figures with the same reference numbers.

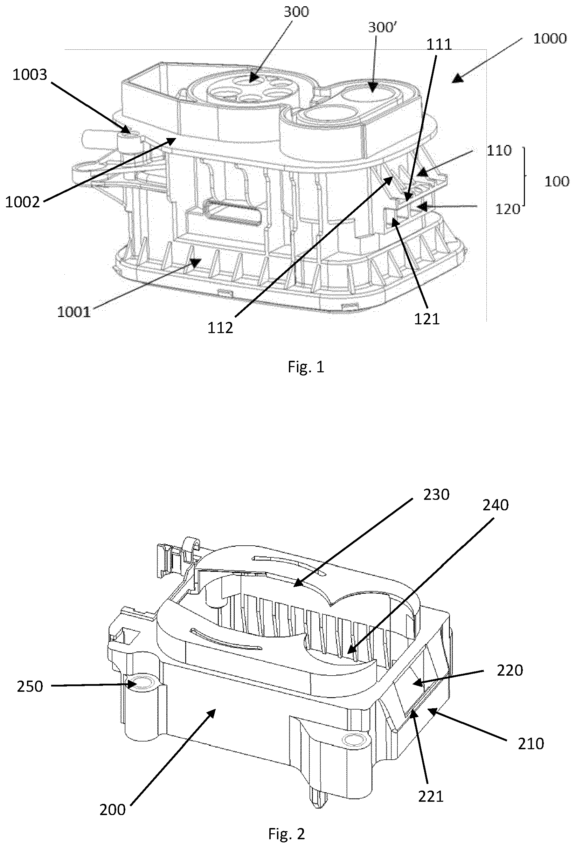

Figure 1 schematically illustrates a perspective view of a charging socket 1000, for example for a hybrid or electric vehicle, according to an embodiment of the present invention.

The structure of a charging socket according to an embodiment of the present invention is briefly outlined in the following paragraphs and is described in more details for example in document WO 2015/004053 A1.

In particular, the internal structure of the housing 102, of the contact chambers 108 provided with contact elements 112 and of the drainage channels 132a-e of the charging socket 100 described in WO 2015/00453 A1 can be adopted also for the present invention. For example, the structure of the contact chambers 108 described in WO 2015/00453 A1 can be adopted also for the cavities 300, 300' of the present invention and the structure of the drainage channels 132a-e described in WO 2015/00453 A1 can be adopted also for the drainage channels 121 of the present invention.

The charging socket 1000 according to an embodiment of the present invention comprises a housing 1001, which can be produced from an electrically insulating plastic material using injection-molding technology. The housing 1001 has an assembly plate 1002, from which the actual insertion socket partially protrudes. The charging socket 1000 comprises a plurality of cavities 300, 300' for receiving electrical contacts: in particular, in Fig. 1, five cavities 300 for receiving AC contacts and two cavities 300' for receiving DC contacts are illustrated. However, it must be understood that any number of AC and/or DC electrical contacts may be formed in the charging inlet 1000.

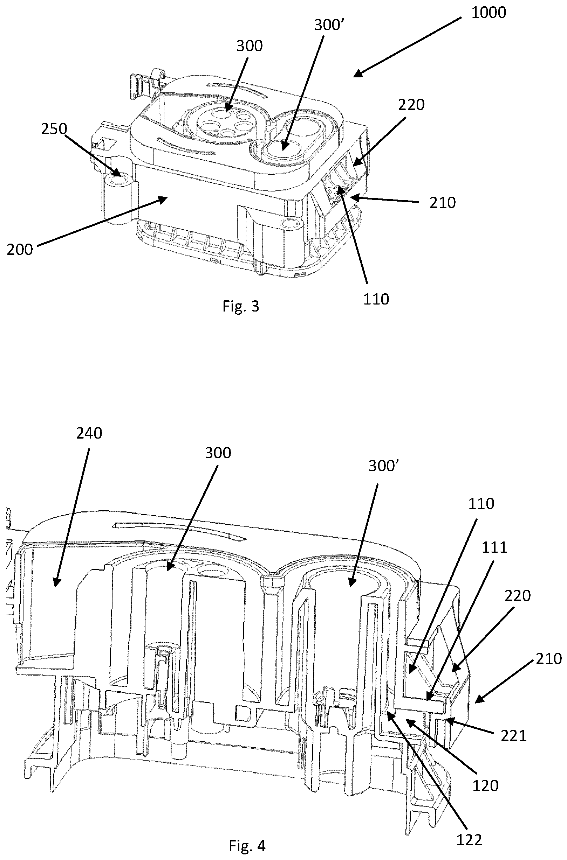

Each of the cavities 300, 300' of the charging socket 1000 has a drainage opening 122 (visible in the sectional view of the charging socket 1000 of Fig. 4), through which fluids, such as gas or liquids, which have entered the contact chamber can be discharged.

In the charging socket 1000 according to an embodiment of the invention, each drainage opening 122 opens into a corresponding drainage channel 121, which is produced from the housing material. Each drainage channel 121 is closed along all sides and is constructed separately for each cavities 300, 300'.

For illustrative and not limiting purposes, four drainage channels 121 are illustrated in Fig. 1. However, it is clear that any number of drainage channels 121 may be formed, for instance one, two, three, five or more.

Each drainage channel 121 has a substantially orthogonal section and shares at least one side with an adjacent drainage channel 121. In this way, the drainage component 120, comprising four drainage channels 121 in the embodiment of Fig. 1, has a substantially rectangular section with two parallel long sides and two parallel short sides. In correspondence of one long side of the drainage component 120 (the long side closer to the cavities 300, 300' in the configuration of Fig. 1), a projecting surface 111 is formed. The projecting surface 111 projects outward of the housing 1001 and forms a fixing component 110 for fastening a mounting bracket 200 onto the housing 1001 of the charging socket 1000. The projecting surface 111 shown in Fig. 1 is further supported by supporting ribs 112 which provides an increased robustness and mechanical stability to the fixing component 110.

The charging socket 1000 thus comprises a dual-functional element 100 formed on a lower surface and comprising a fixing component 110 and a drainage component 120 that share a projecting surface 111, projecting downwards of the charging socket 1000. The dual-functional element 100 is thus partially formed inside the housing 1001 of the charging socket 1000 (since the drainage channels 121 are connected to the contact chambers inside the housing 1001) and is partially protruding from the housing 1001 (since the projecting surface 111 is projecting downwards of the charging socket 1000).

In the present disclosure, it has to be understood that a preferred orientation is defined by the force of gravity and that the terms "upper", "lower", "upwards", "downwards", etc. are defined in accordance thereto. In fact, it is clear that the fluids flow within the drainage channels 121 and come out of the drainage component 120 because of the gravity force. The charging socket 1000 is preferably arranged in the hybrid or electrical vehicle so that it is orientated in an oblique manner towards the rear; therefore, fluids flow within the drainage channels 121 which are preferably angled towards the rear of the vehicle. Therefore, the drainage component 120 is preferably located on the lower surface of the charging socket 1000 to let fluids come out of the charging socket 1000.

As can be seen in Fig. 1, in the assembly plate 1002, securing openings 1003 are further provided, through which the charging socket 1000 can be connected to the vehicle chassis by means of rivets or screws.

Figure 2 schematically illustrates a perspective view of a bracket 200 to be mounted on the charging socket 1000, according to an embodiment of the present invention. The mounting bracket 200 comprises a receiving portion 240 mating the shape of the housing 1001 of the charging socket 1000, which is configured for accommodating the electrically insulated housing 1001 and for protecting it from direct exposure to external elements such as moisture, water or dust. The mounting bracket 200 further comprises a main inlet opening 230 for receiving the electrical contacts to be inserted into the cavities 300, 300' of the electrically insulated housing 1001.

One of the external surfaces of the bracket 200 includes a fixing opening 220 having a fitting portion 221 to be engaged with the fixing component 110 of the charging bracket 1000, in order to maintain the bracket 200 and the housing 1001 in the correct reciprocal position.

The external surface of the bracket 200 including the fixing opening 220 further comprises a protective portion 210 in correspondence of the drainage component 120, so as to prevent external objects, such as dust or water, to enter the drainage channels 121.

The bracket 200 may further include securing portions 250 for receiving rivets or screws for connecting the bracket 200 to the vehicle chassis.

The electrically insulated housing 1001 is inserted into the receiving portion 240 of the mounting bracket 200 so that the inlet opening 230 is aligned with the cavities 300, 300' and the fixing opening 220 is placed in correspondence with the fixing component 110 of the charging socket 1000. Figure 3 schematically illustrates a perspective view of a charging socket 1000 further comprising the mounting bracket 200, according to an embodiment of the present invention.

The bracket 200 may be assembled to the housing 1001 for different purposes; for example, the housing 1001 may be fixed to the car chassis through the bracket 200 and the bracket 200 can hold the courtesy lights whose LEDs are located into housing 1001. Moreover, the bracket 200 may be used to protect the housing 1001 against external elements, since, as can be seen in Fig. 3, the protective portion 210 covers the drainage component 120 of the charging socket 1000, when the bracket 200 is mounted thereto. The bracket may advantageously protect the housing 1001 against external elements, while still allowing the stream of water through the drainage channels 121, since the drainage channels 121 are not obstructed by the bracket 200 mounted onto the housing 1001 (see Fig. 3 and also Fig. 4).

The mechanical fitting of the bracket 200 and the electrically insulated housing 1001 is schematically illustrated in the sectional view of the charging socket 1000 according to the present invention in Figure 4.

After that the electrically insulated housing 1001 has been inserted into the receiving portion 240 of the mounting bracket 200, the projecting surface 111 of the fixing component 110 is inserted into the fixing opening 220 and fitted on the fitting portion 221 of the bracket 200, which supports and holds it, so as to maintain the housing 1001 and the bracket 200 in the correct reciprocal position.

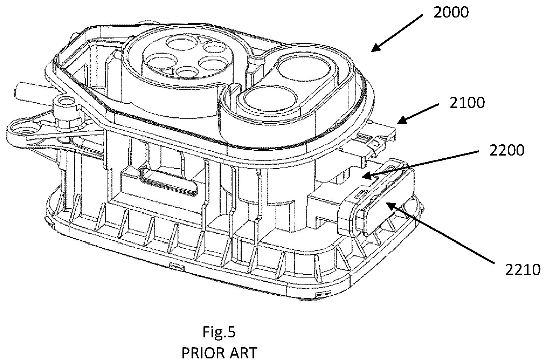

In Figure 5 a perspective view of a charging socket 2000 according to prior art is schematically illustrated, for comparison. The charging socket 2000 according to prior art comprises a fixing element 2100 for fixing it to a mounting bracket 200 and drainage element 2200, which are molded as two distinct components. Therefore, the molding process is more difficult and requires a larger amount of plastic, thus increasing production times and costs. Moreover, a protective cap 2210 is necessary for covering the drainage element 2200 and for preventing external elements to enter into the drainage channels.

While the invention has been described with respect to the preferred physical embodiments constructed in accordance therewith, it will be apparent to those skilled in the art that various modifications, variations and improvements of the present invention may be made in the light of the above teachings and within the scope of the amended claims.

For instance, even if a charging socket for an electric or hybrid vehicle has been described, it is clear that the solutions according to the invention may also be used for other plug type connectors in which adequate air and creep current resistance and removal of water even in moist- or salt-containing atmospheres have to be ensured.

In addition, those areas in which it is believed that those of ordinary skill in the art are familiar, have not been described herein in order not to unnecessarily obscure the invention described. Accordingly, it must be understood that the invention is not to be limited by the specific illustrative embodiments, but only by the scope of the appended claims.

### LIST OF REFERENCES

100: dual-functional element
110: fixing component
111: projecting surface
112: supporting ribs
120: drainage component
121: drainage channel
122: drainage opening
200: bracket
210: protective portion
220: fixing opening
221: fitting portion
230: inlet opening
240: receiving portion
250: securing portion
300, 300': cavities
1000: charging socket
1001: housing
1002: assembly plate
1003: securing openings
1110: opening
2000: charging socket according to prior art
2100: fixing element according to prior art
2200: drainage element according to prior art
2210: protective cap according to prior art

## Claims

1. A charging socket (1000), for example for an hybrid or electric vehicle, comprising:
- an electrically insulating housing (1001);
- one or more cavities (300, 300') for inserting one or more electrical contacts, said one or more cavities (300, 300') being accommodated into said housing (1001);
- a dual-functional element (100) partially protruding from an outer surface of said electrically insulating housing (1001), wherein said dual-functional element (100) comprises a fixing component (110) and a drainage component (120), wherein said fixing component (110) protrudes from said electrically insulating housing (1001) and is configured for fixing said electrically insulating housing (1001) to a mounting bracket (200) and said drainage component (120) includes at least one drainage channel (121), formed within said housing (1001), for discharging fluids from said charging socket (100); and
- a bracket (200) mounted on said electrically insulating housing (1001), said bracket (200) comprising a fitting portion (221) on which said fixing component (110) is fitted, in order to fasten said bracket (200) to said electrically insulating housing (1001);
**characterized in that:**
said bracket (200) further comprises a fixing opening (220) into which said fixing component (110) is inserted, in order to fasten said bracket (200) to said electrically insulating housing (1001), and
said bracket (200) further comprises a flat protective portion (210) and is configured in such a way that, when said bracket (200) is mounted on said electrically insulating housing (1001), said flat protective portion (210) covers said drainage component (120) so as to prevent external objects from entering into said housing (1001).

2. The charging socket (1000) according to claim 1, wherein said fixing component (110) comprises a projecting surface (111) configured to be fitted on a mating fitting portion (221) of a mounting bracket (200).

3. The charging socket (1000) according to claim 1 or 2, wherein said fixing component (110) comprises a projecting surface (111) configured to be inserted into a corresponding fixing opening (220) of a mounting bracket (200).

4. The charging socket (1000) according to claim 2 or 3, wherein said at least one drainage channel (121) comprises at least two drainage channels (121) adjacent to one another and forming a drainage component (120) having a rectangular section with two long sides and two short sides, and said projecting surface (111) of said fixing component (110) projects outwards of one of the two long sides of said drainage component (120).

5. The charging socket (1000) according to claim 4, wherein said projecting surface (111) projects outwards of the long side of said drainage component (120) that is closer to said one or more cavities (300, 300').

6. The charging socket (1000) according to any of previous claims, wherein said bracket (200) further comprises an inlet opening (230) which is placed in correspondence of said one or more cavities (300, 300') of said electrically insulating housing (1001) so that one or more electrical contacts can be inserted into said one or more cavities (300, 300').

7. A hybrid or electric vehicle provided with a charging socket (1000) according to any of previous claims, wherein said charging socket (1000) is mounted on the vehicle chassis.

## Patentansprüche

1. Ladesteckdose (1000), beispielsweise für ein Hybrid- oder Elektrofahrzeug, umfassend:
- ein elektrisch isolierendes Gehäuse (1001),
- einen oder mehrere Hohlräume (300, 300') zum Einsetzen eines oder mehrerer elektrischer Kontakte, wobei der eine oder die mehreren Hohlräume (300, 300') in dem Gehäuse (1001) untergebracht sind,
- ein Doppelfunktionselement (100), das teilweise aus einer Außenfläche des elektrisch isolierenden Gehäuses (1001) herausragt, wobei das Doppelfunktionselement (100) eine Befestigungskomponente (110) und eine Drainagekomponente (120) umfasst, wobei die Befestigungskomponente (110) aus dem elektrisch isolierenden Gehäuse (1001) herausragt und so konfiguriert ist, dass sie das elektrisch isolierende Gehäuse (1001) an einer Montagehalterung (200) befestigt, und die Drainagekomponente (120) mindestens einen in dem Gehäuse (1001) ausgebildeten Drainagekanal (121) umfasst, um Flüssigkeiten aus der Ladesteckdose (100) zu entleeren, und
- eine an dem elektrisch isolierenden Gehäuse (1001) angebrachte Halterung (200), wobei die Halterung (200) einen Passabschnitt (221) umfasst, auf welchem die Befestigungskomponente (110) angebracht ist, um die Halterung (200) an dem elektrisch isolierenden Gehäuse (1001) zu befestigen,
**dadurch gekennzeichnet, dass**
die Halterung (200) ferner eine Befestigungsöffnung (220) umfasst, in welche das Befestigungselement (110) eingesetzt wird, um die Halterung (200) an dem elektrisch isolierenden Gehäuse (1001) zu befestigen, und
die Halterung (200) ferner einen flachen Schutzabschnitt (210) umfasst und so konfiguriert ist, dass, wenn die Halterung (200) an dem elektrisch isolierenden Gehäuse (1001) angebracht ist, der flache Schutzabschnitt (210) die Drainagekomponente (120) abdeckt, um zu verhindern, dass externe Objekte in das Gehäuse (1001) eindringen.

2. Ladesteckdose (1000) gemäß Anspruch 1, wobei das Befestigungselement (110) eine vorstehende Fläche (111) umfasst, die so konfiguriert ist, dass sie auf einen passenden Passabschnitt (221) einer Montagehalterung (200) passt.

3. Ladesteckdose (1000) gemäß Anspruch 1 oder 2, wobei die Befestigungskomponente (110) eine vorstehende Fläche (111) umfasst, die so konfiguriert ist, dass sie in eine entsprechende Befestigungsöffnung (220) einer Montagehalterung (200) eingesetzt werden kann.

4. Ladesteckdose (1000) gemäß Anspruch 2 oder 3, wobei der mindestens eine Drainagekanal (121) mindestens zwei nebeneinander liegende Drainagekanäle (121) umfasst, welche eine Drainagekomponente (120) mit einem rechteckigen Querschnitt mit zwei langen Seiten und zwei kurzen Seiten bilden, und die vorstehende Fläche (111) des Befestigungselements (110) von einer der beiden langen Seiten des Drainageelements (120) nach außen vorsteht.

5. Ladesteckdose (1000) gemäß Anspruch 4, wobei die vorstehende Fläche (111) von der langen Seite des Drainageelements (120), das näher an dem einen oder den mehreren Hohlräumen (300, 300') liegt, nach außen herausragt.

6. Ladesteckdose (1000) gemäß einem der vorherigen Ansprüche, wobei die Halterung (200) ferner eine Einlassöffnung (230) umfasst, welche in Übereinstimmung mit dem einen oder den mehreren Hohlräumen (300, 300') des elektrisch isolierenden Gehäuses (1001) angeordnet ist, so dass ein oder mehrere elektrische Kontakte in den einen oder die mehreren Hohlräume (300, 300') eingeführt werden können.

7. Hybrid- oder Elektrofahrzeug, das mit einer Ladesteckdose (1000) gemäß einem der vorherigen Ansprüche ausgestattet ist, wobei die Ladesteckdose (1000) am Fahrzeugchassis montiert ist.

## Revendications

1. Prise de charge (1000), par exemple pour un véhicule hybride ou électrique, comprenant :
- un boîtier électriquement isolant (1001) ;
- une ou plusieurs cavités (300, 300') pour l'insertion d'un ou plusieurs contacts électriques, lesdites une ou plusieurs cavités (300, 300') étant logées dans ledit boîtier (1001) ;
- un élément à double fonction (100) faisant partiellement saillie à partir d'une surface extérieure dudit boîtier électriquement isolant (1001), dans lequel ledit élément à double fonction (100) comprend un composant de fixation (110) et un composant de drainage (120), dans lequel ledit composant de fixation (110) fait saillie à partir dudit boîtier électriquement isolant (1001) et est configuré pour fixer ledit boîtier électriquement isolant (1001) à un support de montage (200) et ledit composant de drainage (120) comprend au moins un canal de drainage (121), formé à l'intérieur dudit boîtier (1001), pour décharger des fluides à partir de ladite prise de charge (100) ; et
- un support (200) monté sur ledit boîtier électriquement isolant (1001), ledit support (200) comprenant une partie d'ajustement (221) sur laquelle ledit composant de fixation (110) est ajusté, afin d'arrimer ledit support (200) audit boîtier électriquement isolant (1001) ;
**caractérisée en ce que** :
ledit support (200) comprend en outre une ouverture de fixation (220) dans laquelle ledit composant de fixation (110) est inséré, afin d'arrimer ledit support (200) audit boîtier électriquement isolant (1001), et
ledit support (200) comprend en outre une partie de protection plate (210) et est configuré de telle sorte que, lorsque ledit support (200) est monté sur ledit boîtier électriquement isolant (1001), ladite partie de protection plate (210) recouvre ledit composant de drainage (120) de manière à empêcher que des objets extérieurs ne pénètrent dans ledit boîtier (1001).

2. Prise de charge (1000) selon la revendication 1, dans laquelle ledit composant de fixation (110) comprend une surface en saillie (111) configurée pour être ajustée sur une partie d'ajustement homologue (221) d'un support de montage (200).

3. Prise de charge (1000) selon la revendication 1 ou 2, dans laquelle ledit composant de fixation (110) comprend une surface en saillie (111) configurée pour être insérée dans une ouverture de fixation correspondante (220) d'un support de montage (200).

4. Prise de charge (1000) selon la revendication 2 ou 3, dans laquelle ledit au moins un canal de drainage (121) comprend au moins deux canaux de drainage (121) adjacents l'un à l'autre et formant un composant de drainage (120) ayant une section rectangulaire avec deux côtés longs et deux côtés courts, et ladite surface en saillie (111) dudit composant de fixation (110) fait saillie vers l'extérieur de l'un des deux côtés longs dudit composant de drainage (120).

5. Prise de charge (1000) selon la revendication 4, dans laquelle ladite surface en saillie (111) fait saillie vers l'extérieur du côté long dudit composant de drainage (120) qui est plus proche desdites une ou plusieurs cavités (300, 300').

6. Prise de charge (1000) selon l'une quelconque des revendications précédentes, dans laquelle ledit support (200) comprend en outre une ouverture d'entrée (230) qui est placée en correspondance avec lesdites une ou plusieurs cavités (300, 300') dudit boîtier électriquement isolant (1001) de sorte qu'un ou plusieurs contacts électriques peuvent être insérés dans lesdites une ou plusieurs cavités (300, 300').

7. Véhicule hybride ou électrique équipé d'une prise de charge (1000) selon l'une quelconque des revendications précédentes, dans lequel ladite prise de charge (1000) est montée sur le châssis de véhicule.
